(19) Europäisches Patentamt
European Patent Office
Office européen des brevets

(11) **EP 3 098 574 B1**

(12) **EUROPEAN PATENT SPECIFICATION**

(45) Date of publication and mention
of the grant of the patent:
**15.12.2021   Bulletin 2021/50**

(51) Int Cl.:
*G01F 9/00* *(2006.01)*      *G01F 9/02* *(2006.01)*

(21) Application number: **16169280.1**

(22) Date of filing: **24.05.2007**

(54) **DEVICE FOR DETERMINING A FUEL CONSUMPTION BEHAVIOR**

VORRICHTUNG ZUR BESTIMMUNG EINES KRAFTSTOFFVERBRAUCHSVERHALTENS

DISPOSITIF DE DÉTERMINATION D'UN COMPORTEMENT DE CONSOMMATION DE CARBURANT

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **26.05.2006   SE 0601174**

(43) Date of publication of application:
**30.11.2016   Bulletin 2016/48**

(62) Document number(s) of the earlier application(s) in
accordance with Art. 76 EPC:
**07748512.6 / 2 954 497**

(73) Proprietor: **Scania CV AB
151 87 Södertälje (SE)**

(72) Inventors:
• **BRÅKENHIELM, Erik
  192 55 Sollentuna (SE)**
• **ANDERSSON, Jon
  144 62 Rönninge (SE)**

(74) Representative: **Scania CV AB
Patents, GP 117kv
151 87 Södertälje (SE)**

(56) References cited:
**WO-A1-00/07150        DE-A1- 10 138 119
DE-A1- 19 958 393     US-A- 5 995 895**

## Description

## Field of the Invention

The present invention relates to systems for determining the fuel consumption behavior of a vehicle driver, and in particular to a device to assess a fuel consumption behavior of the driver of a vehicle according to the preamble of claim 1.

## Background of the Invention

When driving heavy vehicles, such as trucks, buses and the like, the vehicle economy has in time gained a greater effect on the profitability in the business in which the vehicle is used. Except for the acquiring cost of the vehicle, the largest items of expenditure for a vehicle consist of fuel costs and service costs. These costs are often connected, i.e. a vehicle that is heavily used both consumes more fuel and are exposed to greater wear with increasing service costs as a consequence. An existing problem for the companies that uses heavy vehicles in their business is nonetheless that it is difficult to establish how great part of the vehicle fuel consumption and wear that for example is derived from incautious driving, and how great amount that is derived from unfavorable traffic surroundings, such as extremely undulated ground and/or urban environment with heavy traffic.

Consequently, there exists a need for a system to establish a driver's capacity to drive vehicles in a fuel economical manner.

In the International Patent Application WO00/07150 is disclosed a system and a method for showing a driver how to drive a vehicle in an efficient manner. For example, the braking force or the acceleration and retardation can be measured to assess whether the driver is driving the vehicle in a favorable manner. The system includes means, such as a pendulum to determine whether the vehicle is traveling forward or not, if the vehicle is traveling in an uphill slope, downhill slope or on level ground, as well as if the vehicle accelerates, retards or is traveling with a constant speed. This information can be combined to provide the driver with suggestions and advice, according to a number of previously defined suitable driving manners. Even if the disclosed system seeks to disclose to a driver a way in which a vehicle can be driven in an effective manner, the system includes shortcomings in how this assessment is performed, and, consequently, there exists a need for an improved procedure to assess a driver's behavior from a fuel consumption point of view.

## Summary of the Invention

It is an object of the present invention to provide a device for determining the fuel consumption behavior of a driver of a vehicle in a traffic situation, which solves the above problem. This and other objects are achieved according to the present invention by a device according to claim 1, a vehicle according to claim 7 and a method according to claim 8.

According to the present invention, it is provided a device for determining a fuel consumption behavior of a driver of a vehicle for at least a first segment of a distance the vehicle travels, wherein the said segment constitutes at least one downhill slope. The device includes means for determining whether the vehicle is in the said first segment, means for, when the vehicle is in the said segment, continuously or at certain, or predetermined intervals, determine whether the vehicle driver is taking a first measure, where said first measure constitutes a measure for take off of a positive motor torque,
- means for determining a measurement of said first measure during said segment, and means for, based on said measurement, determining a parameter value representing a fuel consumption behavior starting from predetermined criteria.

This has the advantage that each time the vehicle is being driven in a downhill slope, a determination of the driver's behavior can be performed, i.e., the driver's capacity to drive vehicles in an economical manner in the downhill slope can be assessed in a correct manner.

The said means for determining whether the vehicle is in a downhill slope can comprise means to perform the said determination by a determination of the vehicle's driving resistance. This has the advantage that the gradient (slope) of the downhill slope along with the weight of the vehicle can have an influence on the determination of said fuel consumption behavior, i.e. the behavior is influenced of whether the vehicle has been heavily loaded or not loaded. The said means for determining if the vehicle is in a downhill slope can, alternatively, or in addition thereto, include at least one from the group: inclinometer, accelerometer, barometer, navigation system, such as GPS.

The device can include means for determining if the vehicle driver, during said segment, in a first stage, is taking said first measure and in a second stage, subsequent to said first stage, is taking a second measure, constituting a vehicle braking measure. This has the advantage that a vehicle driver that first requests an acceleration in a downhill slope, to then brake in the same downhill slope can be "punished" for this behavior. Further, a representation of the time the said respective measures has been taken, and/or a representation of the amounts of energy generated by said respective measures, can be used to give an accurate determination of the fuel consumption behavior.

The device can include means for, if a second segment that is closely or immediately subsequent to said first segment constitute an uphill slope, bringing this as well into the determination of the consumption behavior. For example, if a downhill slope is followed by an uphill slope, a positive motor torque take off at the end of the downhill slope can be assessed as "positive" since this facilitates for the vehicle to get up the subsequent uphill slope in an economical manner.

In an alternative embodiment, the device comprises means for determining if an uphill slope transitions to a downhill slope, means for, during said uphill slope and downhill slope, continuously, or with certain or predetermined intervals, determine whether the vehicle driver is taking said first measure, means for determining a first measurement of said first measure during said uphill slope and a second measurement of said first measure during said downhill slope, and means for, based on said measurement determining a parameter value representing a fuel consumption behavior starting from predetermined criteria.

This has the advantage that the motor torque take off before and after, respectively, the top of a hill constituted by the said second and first segment, can be compared to evaluate the capacity of the driver to take advantage of the forthcoming downhill slope for acceleration of the vehicle.

The device can comprise means for transmitting the said parameter value representing the driver's fuel consumption behavior, to display means arranged in said vehicle. This has the advantage that the driver can immediately receive feedback on his/her behavior.

The device can comprise means for storing said determined anticipation ability for a plurality of downhill slopes. This has the advantage that, e.g., the driver's average behavior during a certain distance, or time period, can be determined. The said parameter values representing the driver's fuel consumption behavior can be transmitted to a distantly located monitoring central. This has the advantage that a vehicle fleet owner centrally can evaluate a plurality of vehicle drivers.

The device can also include means for, during at least a section, continuously or at certain intervals determine parameter values representing the vehicle's driving resistance and the momentary fuel consumption of the vehicle, and means for, based on said determined parameter values representing driving resistance and fuel consumption, determine a fuel consumption behavior starting from predetermined criteria. This has the advantage that by relating the current fuel consumption to driving resistance, a measurement of a driver's Ability can be compared with corresponding measurements for other drivers, and provide an accurate comparison regardless of whether a driver has been driving a heavily loaded vehicle while another driver has driven an empty vehicle.

The present invention also relates to a vehicle.

## Brief Description of the Drawings

Fig. 1 schematically illustrates a control system of a vehicle where the present invention advantageously can be used.
Fig. 2a-b illustrates an exemplary device according to the present invention.
Fig. 3 illustrates an exemplary method for determining a fuel consumption behavior.
Fig. 4 illustrates an alternative exemplary method for determining a fuel consumption behavior.
Fig. 5 illustrates a further alternative exemplary method of determining a fuel consumption behavior.
Fig. 6 illustrates an alternative exemplary device.
Fig. 7a-b illustrates the procedure of determining a fuel consumption behavior according to the present invention
Fig. 8 illustrates a further alternative exemplary device.

## Detailed description of exemplary embodiments

In this description, the term vehicle internal sensors means sensors that only obtains data from the relative movements of the vehicle, i.e. changes in movements from one time to another, and which do not use information from external systems, such as positioning systems or map databases. Such vehicle internal sensors can, for example, consist of lateral acceleration sensors, i.e. sensors delivering signals with which the rate of change of the vehicle speed in the lateral direction can be determined, for example in order to determine whether the vehicle runs the risk of tipping over due to the driver performing an incautious maneuver. Furthermore, the sensors can comprise wheel speed sensors, i.e. sensors for delivering signals with which the rotation speed of the wheels and traveled distance can be determined, steering angle sensors that deliver signals with which the angle of the steering wheels in relation to the longitudinal axis of the vehicle can be determined, and sensor means for delivering signals from which the yaw rate, i.e. how quickly the vehicle turns, can be calculated.

With the concept motor torque take off is intended, in this description, a vehicle motor propelling force acting on the vehicle's propulsion. A positive motor torque take off has the meaning that the motor, by means of fuel supply and with a gear in place, generates a force which strives to propel the vehicle forward in the vehicle's direction of motion. Conversely, a negative motor torque take off means motor-braking with a gear in place, which strives to decrease the speed of the vehicle in the direction of motion.

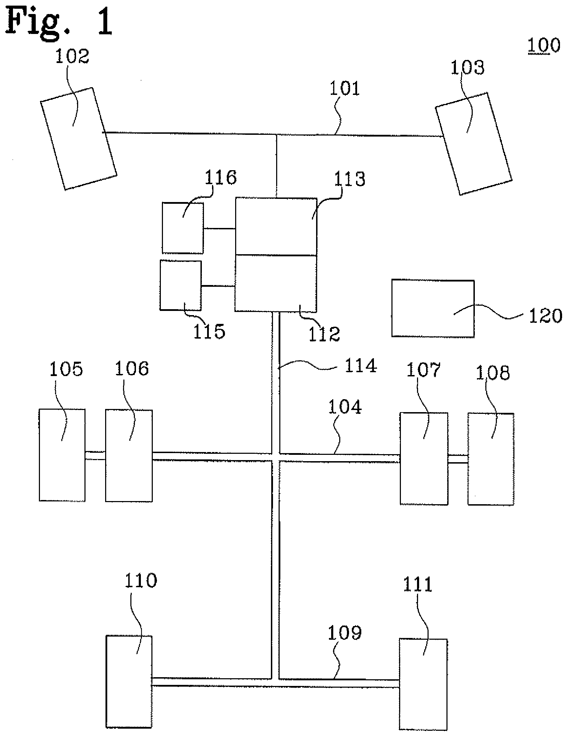

In fig. 1 is schematically illustrated a control system for a vehicle 100 with which the present invention can be utilized. The vehicle 100 comprises a front shaft 101 with steering wheels 102, 103, a rear drive shaft 104 with driving wheels 105-108, and a rear pressure equalizer shaft 109 with wheels 110, 111. Furthermore, the vehicle 100 contains an engine 113 connected to a gear box 112, which drives the drive shaft 104 by means of an output shaft 114 from the gear box.

Gear box 112 and motor 113 are controlled by control units 115, 116, respectively, which are controlled by a main control unit 117. The Engine Management System (EMS) 116 controls the motor functions of the vehicle, which, for example, can consist of fuel injection and motor-brake. The control is based on a number of input signals, which can consist of signals from (not shown) throttle controls (e.g. the position of the accelerator pedal), speed sensor and brake management system. The Gearbox Management System (GMS) 115 controls the gear functions, wherein, when using an automatic gearbox, the gear shifting can be controlled based on an input signal from speed sensors, in manual gear shifting the shifting can be controlled from an input signal from a gear selector (gear shift lever).

Furthermore, the vehicle contains a Brake Management System (BMS) with a break control unit 120, which controls the brake functions of the vehicle, such as automatic calculation of the load so that a given pedal position always can result in the same brake effect regardless of the load. The brake control unit controls the various brake systems of the vehicle, e.g. retarder and other supplementary brake systems, exhaust brake and service brake, and sends control signals to system modules (not shown) dispersed on the chassis, where electrical control signals are used, e.g. to adjust brake pressure.

A vehicle of the kind shown in fig. 1 includes, except for the above, typically a number of additional control units, see, for example, WO01/86459 A1. Therefore, the above described control units constitute mere examples of what can exist in a vehicle. As is appreciated by a person skilled in the art, two or more of the above described control units can, of course, be integrated in one single control unit.

In a vehicle of the kind shown in fig. 1, it is highly desirable that the driver, when driving the vehicle, is as foresighted as possible to avoid unnecessary braking actions and accelerations, for example those that have been caused by keeping too short distance to the vehicle ahead, or that the driver requests an acceleration on the top of a hill or in the beginning of a following downhill slope to then more or less immediately brake in the downhill slope. It is considerably better, in a wear point of view, as well as from a fuel consumption point of view, if the driver as far as possible takes advantage of energy stored in the vehicle, and do not consume it by using the brakes unnecessarily. The ideal vehicle management by the driver at different situations, however, varies to a large extent, and it is today very difficult to find out whether the driver's behavior is good or poor after that a journey has been performed. If the consumption that a vehicle has had during a certain distance is very low, this can normally with high certainty be considered to constitute a good reference for the driver, and that the vehicle has been driven in an economical manner. If, however, the consumption is high, it can be difficult to determine if the high consumption is due to an non-economical and/or aggressive driving manner, or if the vehicle has been driven heavily loaded in urban traffic or undulated ground, and, therefore, has had a very high fuel consumption also with a very economical driving manner.

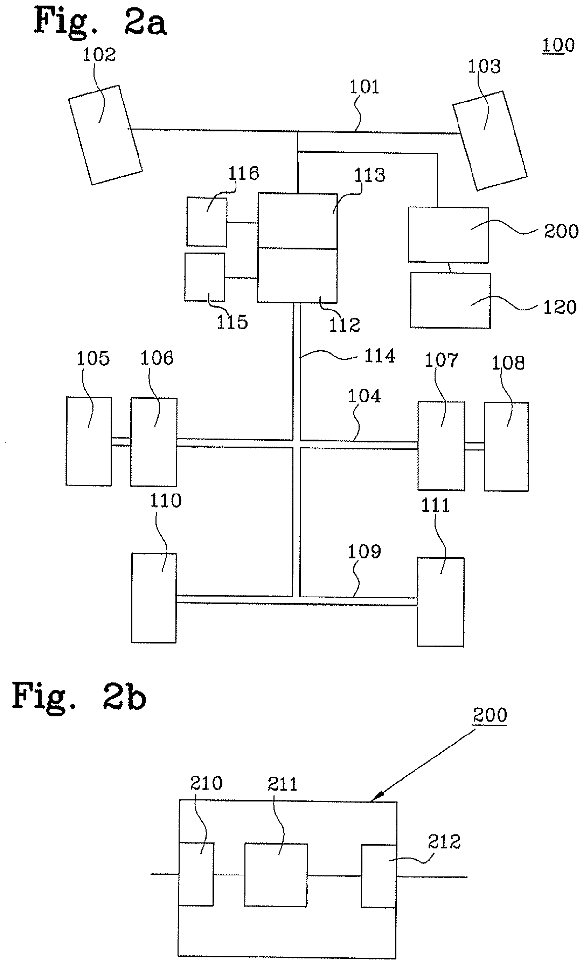

The present invention provides devices for evaluating the behavior of a vehicle driver from a fuel consumption perspective, wherein a driver's ability to drive a vehicle in an economical manner can be assessed in an accurate manner regardless of in which environment the vehicle has been traveling in, and regardless of whether the vehicle has been heavily loaded or empty. Accordingly, the present invention makes it possible for a vehicle owner to assess whether the vehicle has been driven in a satisfactory, i.e. economical manner, and also to compare different drivers of different vehicles in a fair manner. A first embodiment of the invention is explained closer with reference to fig. 2a-b, wherein in fig. 2a, the vehicle in fig. 1 has been provided with a device 200, according to a first embodiment of the invention.

The device 200 is shown more in detail in fig. 2b and comprises means 210 for receiving signals representing motor torque, motor friction, total gear ratio, driving wheel radiuses, acceleration and vehicle mass, and when appropriate converting these signals to a format adapted for a data processing unit 211, arranged in the device 200. The said means 210 can, for example, consist of a respective connection point for each desired signal according to the above, where different signals can have different interfaces. These signals can either originate directly from a respective signal emitting sensor, alternatively, from, for example, any of the above-mentioned control units. The device can, therefore, include means, such as A/D-converters or receivers for receiving wirelessly transmitted sensor signals, for converting signals on these different formats to a common format, which is adapted for said data processing unit 211. Alternatively, the said means 210 can consist of a data bus connection for receiving the sensor signals by means of a data bus, such as, for example, on any of the data bus formats CAN (Controller Area Network), TTCAN or FlexRay, where the sensor signals can be converted to a common data transmission format. The sensor signals can either be provided in a desired data bus format directly by the sensor means, or from an appropriate control unit. For example, the above disclosed engine management unit and gearbox management unit can provide at least a part of said signals. When the said data processing unit 211 has received sensor signals, the processing unit can perform calculations according to the invention according to what is explained below. The data processing unit 211 can, for example, consist of a processor, which is controlled by means of operation instructions, such as a computer program generated by means of an appropriate programming language, and being stored in a storage means, said storage means being built-in or connected to the processor. The said storage means can, for example, consist of one or more from the group: ROM (Read-Only Memory), PROM (Programmable Read-Only Memory), EPROM (Erasable PROM), Flash-memory, EEPROM (Electrically Erasable PROM). The device 200 can consist of a data processing unit with both integrated memory and integrated bus interface for a data bus of the above type and therefore be constructed in very compact manner. The device 200 further comprises output means 212 for output of processed data, for example to a display, arranged in the driver's cabin, or a sound reproduction system, such as a loud speaker, in order to continuously provide the driver with feedback on his/her behavior from a consumption perspective.

With knowledge of the present motor torque, motor friction, total gear ratio, driving wheel radiuses, acceleration and vehicle mass of the vehicle, which parameters the data processing unit 211 can calculate by means of signals provided according to the above, or, alternatively, directly obtain parameter values for, for example, from an appropriate control unit, the data processing unit 211 can calculate a total sum for the resultant of the outer forces rolling resistance, air resistance and gravity acting on the vehicle. This sum is in the following description and claims referred to as driving resistance. With known models for rolling resistance as well as air resistance, which can be stored in a memory connected to the data processing unit, for example in the form of a table or as calculation equations, the contribution of the gravity to the driving resistance can be estimated from the calculated driving resistance, i.e., the slope of the road can be described, whereby the actual inclination of the roadway in relation to the horizontal plane can be determined at each given point in time. With knowledge about the speed of the vehicle, motor torque take off, the configuration of the vehicle and other surroundings data, which data usually is also accessible on the vehicle's data bus, the weight of the vehicle can be calculated for use according to the above. By studying historical variations in the inclination (slope), the undulation of the road can also be determined and divided in different slope segments. This can be performed with either distance or time as a basis of measurement to assess the undulation, wherein the distance easily can be calculated by means of the speed of the vehicle, or the radius of the driving wheels in combination with a rotation sensor. Accordingly, the device 200 can be used to obtain a good representation of the slope of the road on which the vehicle is traveling. In at least a part of the exemplary embodiments of the present invention described below, other ways than driving resistance can be used to calculate the slope of the ground of the vehicle, can be used, for example, an inclinometer, accelerometer, barometer, or a navigation system, such as GPS, can be used.

An additional example of how the inclination can be determined, is given by the Swedish Patent Application 0600370-1, "Metod för bestämning av lutningen för en vag (in English: Method for estimating the inclination of a road)", with the filing date 20 February 2006, which describes a device for estimating the inclination of a ground on which a vehicle is traveling. The device includes means for generating a weighted estimation of the inclination based on parameter values from at least two sources, wherein the device includes means for determining the respective impact of said parameter values on said weighted estimation of the inclination. The said weighting is arranged to be controlled by variations in the reliability of the parameter values. The weighted estimation can be carried out using a statistical filter such as a Kalman filter or an expanded Kalman filter.

By using driving resistance according to the above and/or another inclination estimation, different measurements on a driver's capacity to drive a vehicle in a fuel economical manner can be defined, some examples of which being stated below.

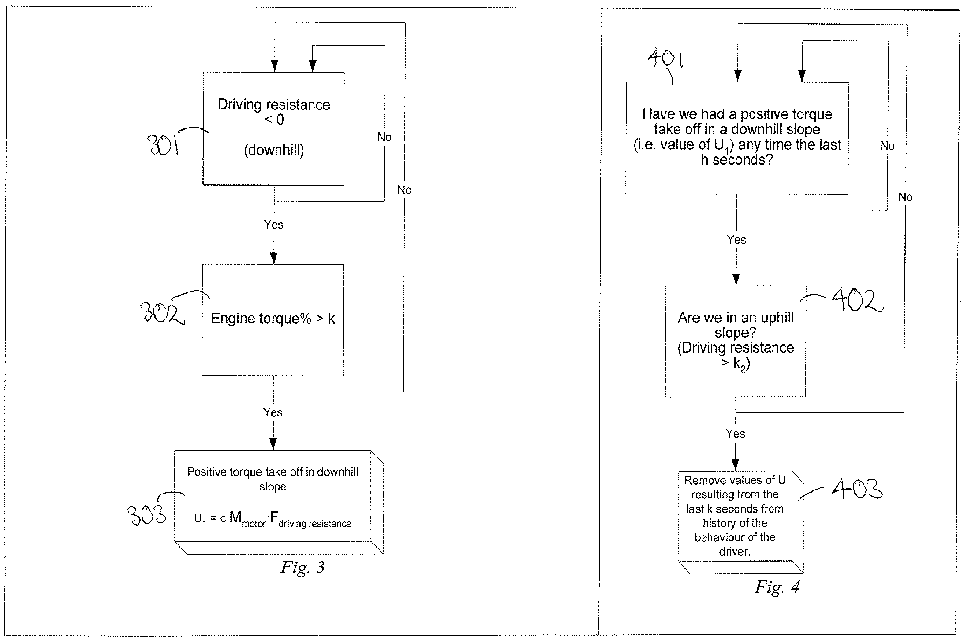

In fig. 3 is described a first method for determining the portion of the time or distance when the motor torque take off has been positive in a downhill slope, which preferably is put in relation to road inclination and vehicle mass, with the aim to reward a driver who releases the accelerator pedal in downhill slopes. This is exemplified by the method in fig. 3, wherein the data processing unit 211 in step 301 determines whether the driving resistance is negative, i.e. if the vehicle is in a downhill slope. If it is determined that the vehicle is in a downhill slope, the process continues to step 302, where it is determined whether the vehicle has a positive motor torque take off that is greater than a parameter $k$, where $k$, for example, can be determined as a percentage of the maximum torque that the engine can deliver. The value of $k$ can be arranged to vary with the inclination, i.e. the steeper the downhill slope is, the lower the $k$, since a steeper inclination provides a greater possibility to accelerate the vehicle by conversion of potential energy to kinetic energy. If, in step 302, it is determined that the actual positive motor torque take off $< k$, the procedure returns to step 301, while it otherwise continues to step 303. With knowledge about the mass of the vehicle and the inclination of the road (for example, current driving resistance according to the above) an assessment of how negative the driver's behavior is, can be calculated according to:

$$U_1 = c \cdot M_{motor} \cdot F_{drivingresis\tan ce} \quad,$$

where $U_1$ represents an opinion that shows how poor the behavior is. $c$ is a constant. The higher the value of $U_1$, the worse the driver has driven the vehicle in the downhill slope, i.e. the driver has not taken advantage of the energy conversion stored in the vehicle. By performing the procedure shown in fig. 3, with certain intervals, predetermined intervals or continuously, while the vehicle is in the downhill slope, a total measurement for said downhill slope can be obtained, e.g., by measuring for how long time a positive motor torque has been taken off in relation to the total time the vehicle has been in the downhill slope, i.e. a very short torque take off can be assessed as being considerably milder than a longer torque take off. Alternatively, the process is repeated with certain or predetermined intervals, whereby the $U_1$ value is stored each time the lowest square in figure 1 is reached, which, consequently, has as result that the number of registered $U_1$

values, in relation to a reference parameter which is counted up during the whole of the downhill slope, represents the portion of the downhill slope where a positive motor torque take off has occurred. The process shown in fig. 3 is repeated for each downhill slope in which the vehicle being is driven, whereby an average of obtained $U_1$ values can be used to assess how skilful the driver has been in using downhill slopes instead of the motor to accelerate the vehicle during a vehicle journey.

In fig. 4 is shown a further method that the device can be arranged to perform and which is based on the method in fig. 3 and which, apart from determining a positive motor torque take off in downhill slope in relation to vehicle weight and present inclination (driving resistance), also takes into consideration future road inclinations, i.e. the road inclination following directly after the downhill slope, so that a driver who, after all, has requested an acceleration in a downhill slope, but only because of an upcoming uphill slope to thereby overcome the uphill slope in an economical manner, is not unnecessarily punished. The method shown in fig. 4 begins in step 401, wherein the data processing unit 211 determines if the motor torque take off has been positive in downhill slope at any time during the last $x$ seconds, i.e. if a $U_1$ value according to fig. 3 has been registered at any time during the last $x$ seconds. If that is the case, the process continues to step 402, where it is determined whether the vehicle is in an upward slope, i.e. if the driving resistance is positive. If that is the case, the possible $U_1$ values that has been present during the last $x$ seconds, e.g. 10 seconds, are, in step 403, erased since the behavior of requesting an acceleration in a downhill slope can be motivated if an uphill slope is forthcoming. In this way it is avoided that a driver at an evaluation is incorrectly "punished" in spite of his/her showing of a good capacity to plan ahead. However, if it in step 402 is determined that the vehicle is not in an uphill slope, the negative $U_1$ values are not erased for the driver.

Apart from, as described above, determining if a positive motor torque take off has been performed in a downhill slope, the device can, according to the first embodiment of the present invention, in addition, or as an alternative to the procedure shown in fig. 4, be arranged to determine the portion of time or distance in a downhill slope when braking with a brake system has been requested following a positive motor torque take off, put in relation to the weight of the vehicle and the inclination of the roadway, earlier in the same downhill slope. In this way, the negative behavior that a driver is showing when accelerating in a downhill slope is mitigated if the driver avoids to later brake in the downhill slope where he earlier has requested an acceleration. Conversely, the driver can be further punished, as compared to the method shown in fig. 3, if the vehicle is both accelerated and subject to a braking action in the same downhill slope.

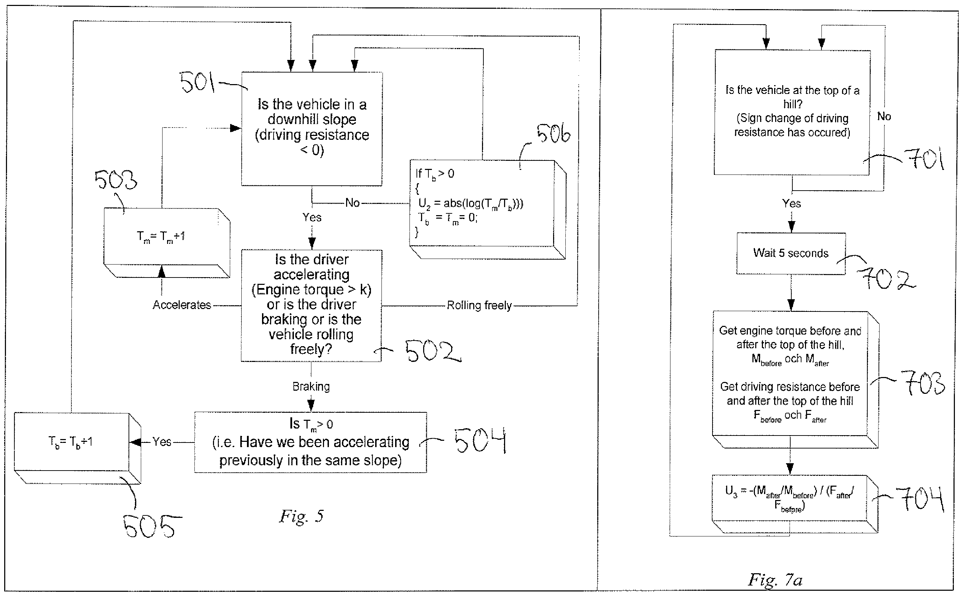

The assessment is, as above, advantageously performed for each started downhill slope. In fig. 5 is shown a method for performing the described evaluation.

The method starts in step 501 where it is determined if the vehicle is in a downhill slope. If so, the process continues to step 502, where it is determined whether the driver accelerates, i.e. motor torque > k, or if the vehicle is subject to influence from any of the brake systems of the vehicle, or if the vehicle rolls freely. If the vehicle is neither accelerated nor is the brakes applied, the process returns to step 501. If the vehicle is accelerated, the process continues to step 503, where a variable $T_m$ is counted up according to $T_m = T_m + 1$, whereupon the procedure returns to step 501 and the procedure continues according to the above. If, in step 502, it is determined that vehicle brakes are applied, the procedure continues to step 504, where it is determined if the vehicle has earlier been accelerated in the same downhill slope, i.e. if $T_m > 0$. If that is not the case, the process returns to step 501. If, however, it is determined that $T_m > 0$ the process continues to step 505, where a variable $T_b$ is counted up according to $T_b = T_b + 1$, whereupon the process returns to step 501 and continues according to the above. When the vehicle has finished the downhill slope and it in step 501 is determined that the vehicle no longer is in a downhill slope, a reference $U_2$ for the passed downhill slope is calculated in step 506. $U_2$ can be calculated as:

$$U_2 = \left| \log\left(\frac{acceleration\_time}{braking\_time}\right) \right|,$$

where the acceleration time is represented by $T_m$ and the braking time is represented by $T_b$. By running through the flow chart shown in fig. 5, with regular intervals, e.g., every 10 ms, the counted up value of $T_m$ respective $T_b$, will represent the time that the vehicle has been subject to a request for an acceleration and has had brakes applied, respectively, during the downhill slope. When $U_2$ has been calculated in step 506, $T_m$ is set = $T_b$ = 0. In contrast to the above, $U_2$ is supposed to be as high as possible for a skilful driver. It is obvious that the driver should avoid requests for accelerations for as long time as the driver has applied the brakes in a downhill slope, which would lead to $U_2 = 0$. There is, consequently, nothing wrong in first requesting an acceleration and then braking; provided that either the braking action was very short or the torque take off was very short. $U_2$ is high when the difference in acceleration time and braking time is large.

Consequently, this example uses the time to determine for how much one has applied the brakes and requested an acceleration, respectively. The method, however, also includes other ways to relate the amount the driver has requested an acceleration in relation to the amount where the driver has applied the brakes following a situation where a motor torque has been active in the same downhill slope. For example, an energy analysis can be performed where supplied (motor) energy is divided with brake energy for the same downhill slope. Alternatively, the distances where the driver has applied the brakes and requested an acceleration, respectively, can be put in relation to each other.

Above, the present invention has been described only in connection to downhill slopes.

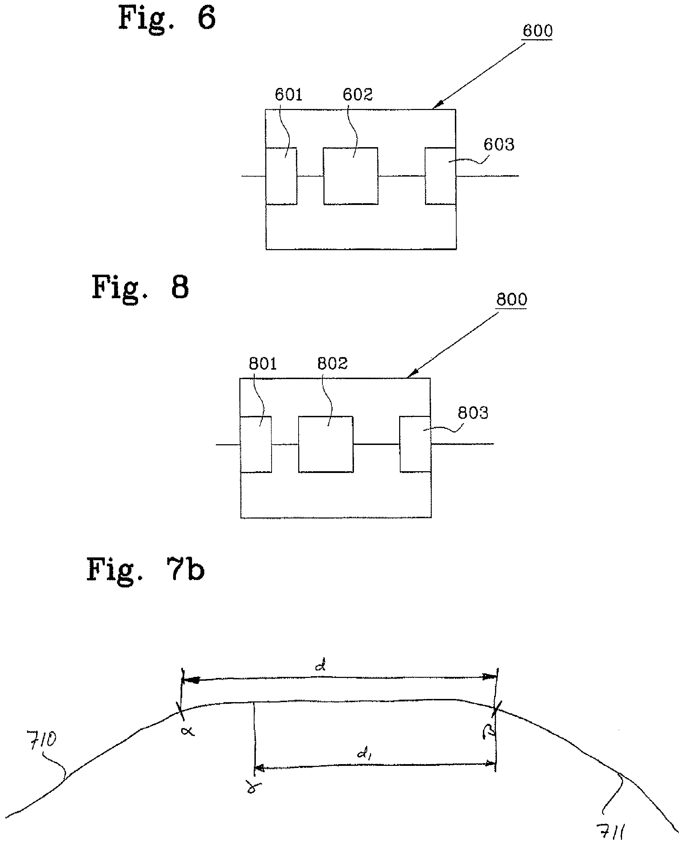

In fig. 6 is shown a device 600 according to a exemplary embodiment. Just as the device shown in fig. 2b, the device 600 comprises means 601 for receiving signals according to the above, and a data processing unit 602 for carrying out processing of received data according to the below. The device 600 also comprises means 603 for output of processed data to, for example, a display or a sound reproduction system, for feedback to the driver of the vehicle.

The device 600 can, apart from determining whether the vehicle is in a downhill slope, also detect special cases in inclinations, such as top of hills and valleys. These are distinguished by sign changes in the estimated inclination.

In fig. 7a is shown an exemplary procedure for evaluating a vehicle driver according to an exemplary embodiment of the present invention. By studying variations in the motor torque take off in view of the vertical curve profile of the roadway, put in relation to a maximum point of a top of a hill and its immediate surroundings, a driver who releases the accelerator pedal to a satisfactory extent in relation to the shape of the hill can be premiered. A top of a hill can, for example, be detected by detecting the sign changes in the driving resistance, or by usage of other ways to determine the inclination of the vehicle ground. Precisely when the vehicle reaches the top of the hill, the driving resistance changes sign (from positive to negative). By continuously, or with certain or predetermined intervals, storing the motor torque request and the driving resistance, the driver's capability of releasing the accelerator pedal at tops of hills can be evaluated. The method in fig. 7a is initiated in step 701 by determining whether the vehicle is at the top of a hill, i.e., if a sign change in the driving resistance has occurred. The device 600 can be arranged to calculate the driving resistance one or more times/s, for example, every 10 ms. If it is determined that the vehicle is at the top of a hill, the process continues to step 702 where the process waits a predetermined time, e.g., 5 s according to the figure, whereby the process continues to step 703, where parameter values are calculated or gathered for the torque delivered by the engine before, $T_{before}$, and after, $T_{after}$, respectively, the top of the hill, and the driving resistance before, $F_{before}$, and after, $F_{after}$, respectively, the top of the hill. In step 704 an evaluation parameter $U_3$ is then calculated according to:

$$U_3 = -\frac{T_{after}/T_{before}}{F_{after}/F_{before}}$$

It is desirable to have as low $U_3$ as possible. From the equation it is realized that the driver accordingly should allow the torque, after the top of the hill, to be much smaller than the torque before the top of the hill, and to an even greater extent if the driving resistance after the top of the hill is much smaller than the driving resistance before the top of the hill, i.e. if the downhill slope is steep, since, in this case, it is better to let the slope accelerate the vehicle. The minus sign shown in the equation is used to, for the sake of convenience, obtain a positive value for $U_3$, (the denominator will always be negative since a top of a hill is defined as a sign change in driving resistance). By taking a (weighted) average for $U_3$ values calculated during a journey, i.e. for every top of a hill calculate the driver's capability to release the accelerator pedal enough, the driver's average behavior at tops of hills can be evaluated (alternatively, the process described in fig. 7a can be arranged such that $U_3$ is only calculated if the downhill slope that follows the top of a hill is steeper than a certain threshold value, i.e. if the absolute value of $F_{after}$ exceeds a certain value) .

Above, the top of a hill is stated as the point where the driving resistance changes sign (from positive to negative). In fig. 7b is shown an alternative procedure for defining measurement points when an uphill slope 710 transitions to a downhill slope 711 and that allows for a refined evaluation of the driver's behavior. By determining the point α where the upward slope angle does not exceed a predetermined value, e.g., 1° or 2°, i.e. the uphill slope has begun to level out and become more level, and the point β where the inclination angle of the following downhill slope exceeds a certain value, e.g., 1° or 2°, i.e. has started to get steeper, the distance d can be determined as the distance between these two points. By also determining the point γ where the driver releases the accelerator pedal, a distance $d_1$ can be defined as constituting the distance of the point γ from the point β. In this manner, $d_1/d$ can be defined as a measurement for the driver's capability to release the accelerator pedal at the top of a hill, where a high value of $d_1/d$ indicates a good fuel consumption behavior. As is realized, the driver can release the accelerator pedal as early as before the point α, why the distance $d_1$ thus can be longer than d, and the quotient $d_1/d$ can thus be larger than one, which indicates a very good fuel consumption behavior. Instead of defining the points α and β as a specific inclination angle, driving resistance can be used instead. In this case, the point α is defined by the point where the driving resistance falls below a certain value, and the point β of the point where the absolute amount of the negative driving resistance exceeds a predetermined value. By using the driving resistance instead of only the inclination of the ground, a more accurate assessment can be performed, where, e.g., the vehicle weight, i.e. whether the vehicle is loaded or not loaded, can influence the assessment.

In fig. 8 is shown a device 800, according to an exemplary embodiment.

Similar to the device shown in fig. 2b, the device 800 comprises means 801 for receiving signals according to the above and a data processing unit 802 for carrying out processing of received data according to the below. The device 800 also comprises means 803 for output of processed data, to, for example, a display or a sound reproduction system, for feedback to the vehicle driver.

The device 800 comprises means for evaluating the present fuel consumption in relation to the current driving resistance. In this way, a correct measurement of consumed fuel amount, with consideration taken to the degree of difficulty of the driving when it comes to vehicle mass, road inclination, speed, wind resistance and rolling resistance, can be calculated.

In order to be able to create a fair measurement of how fuel-efficient a driver is driving a vehicle, and which is possible to compare with corresponding measurements that is obtained for other drivers of other vehicles having different loads and that has traveled other distances, with the aim of determining the driver's capability, it is important to be able to relate the consumption to the factors that the driver can not influence. These factors consist of what has earlier been described as driving resistance, i.e. the sum of all outer forces influencing the vehicle. Accordingly, by relating the current consumption to this driving resistance, a true measurement of the capability of a driver can be created, which then can be compared with corresponding measurements of other drivers, regardless of if one of them has been driving a heavily loaded vehicle up a mountain, while the other has been driving on level ground with an empty vehicle. This measurement can be calculated as:

$$U_4 = k \cdot \frac{B}{F_{drivingresis\tan ce}} \, ,$$

where $k$ is a constant and $B$ is the present fuel consumption expressed in volume unit per unit length. This measurement, however, is misleading in downhill slopes (since a large negative driving resistance should not lead to a mitigating of the consumption) and should therefore not be used at these. Those situations, however, are caught by the process according to fig. 3 above, why $U_4$ therefore is only calculated when the driving resistance is positive.

By calculating an average for $U_4$ for a given journey, two different drivers can be compared. As is realized, the functionality described with reference to fig. 8, can, if required, be incorporated in a device of the kind shown in fig. 2b and/or fig. 6.

Consequently, according to the present invention, the behavior of the driver can be detected for a number of, from a consumption point of view, very important situations. Further, a very fair measurement can be created, which, for the first time, allows for, for example, a vehicle fleet owner to compare fuel consumption values for different drivers in a fast and accurate way, even though these drivers have been driven different vehicles, different load and different distances.

An analysis of the above-mentioned situations can give a fair assessment of a given driver's awareness of, and will to, drive the vehicle as economical as possible. The described calculations can be carried out after a driving shift as a support for driver punishment or reward, as well as in real time during driving, in order to coach the driver to a more favorable behavior, e.g. by means of tips. For example, a driver can obtain tips by means of a display when the vehicle has passed the top of a hill and the registered value of $U_3$ was higher than what beforehand has been defined as desirable. Another field of usage is the generation of reports of average values for one or a plurality of $U_1$, $U_2$, $U_3$, $U_4$ for all the drivers in a haulage business, to be able to identify which driver who is driving the most and the least fuel-effective, respectively.

The described invention can, consequently, in a new and unique way describe how fuel-effective a driver is driving a vehicle during the whole distance, and analyze the behavior of the driver in a number of situations which particularly well describe the capability of the driver to drive fuel-effective.

In the above description, the invention has only been described in connection to the road inclination. The described driver evaluation can, however, be further refined by also taking the traffic environment in other respects into consideration. Concerning the traffic environment, it is possible to obtain a very accurate representation of the surroundings of the vehicle. In the parallel Swedish Patent Application 0601176-1 entitled "Classification Device" and having the same filing date as the present application, is described a solution for, during traveling, determining the type of a distance, which is divided into segments, of a route that a vehicle is traveling. The described solution can, in a very accurate manner, determine the type of a plurality of consecutive or adjacent segments, such as right-hand turn, left-hand turn, straight stretch, uphill slope, downhill slope, and, in particular together with time and/or speed data perform an accurate classification of the distance. The classification can, for example, consist of idle driving, power take off (PTO), marshalling, queue, city centre, urban area, undulated and/or straight or curved road, straight and level or undulated road.

The above described exemplary devices according to the present invention can comprise means for receiving a surroundings classification from a device according to said Patent Application. Alternatively, a device according to the present invention can comprise means for performing the said described traffic surroundings classification. By using a very accurate description of the traffic environment (vehicle surroundings) in this manner, consideration can also be taken to whether the vehicle has been driven in, for example, urban traffic with many starts and stops, and therefore has a higher consumption for this reason. Accordingly, this has as result that a very accurate analysis of the driver's behavior can be accomplished.

According to the above, the present invention can be used for real time feedback to the driver, and apart from giving tips according to the above, the vehicle can be provided with a display that constantly shows the above *U* values or a combined measurement of all of the U-values, for example as a percentage between 0 and 100, where, for example, a result of 85% and above indicates a very economical driving manner. Consequently, the driver can "compete" with him-/herself and others, in driving in a safe and economical manner.

The present invention can further be combined with other systems for evaluating a vehicle driver.

In the parallel Swedish Patent Application 0601173-8 entitled "Anordning för bromsslitagebedömning (in English: Device for Brake Wear Assessment)" and having the same filing date as the present invention, it is described a solution to assess a vehicle driver's ability to use vehicle brakes. The present invention can advantageously be utilized together with the said solution.

Further, in the parallel Swedish Patent Application 0601175-3, entitled "Anordning för bestämning av förutseendeformåga (in English: Device for Determining an anticipation ability)" and having the same filing date as the present application, is described another system for driver evaluation, together with which the present invention advantageously can be utilized. This patent application discloses a device for evaluating a vehicle driver's anticipation ability by measuring the manner in which the vehicle's accelerator and brake controls are used.

By combining a plurality of different procedures for evaluating a vehicle driver, a very accurate determination of the vehicle driver can, when put together, be performed.

As is realized, the vehicle can be arranged to continuously, or with certain intervals, transmit data, for example via a mobile communication system, to a surveillance central, e.g. the measurement values of the last 5 minutes, whereby the above evaluation can be performed in the surveillance central, instead of in the vehicle.

**Claims**

1. Device for determining a fuel consumption behavior of a driver of a vehicle for at least a section of a distance a vehicle is traveling, wherein said section is constituted by at least one uphill slope followed by a downhill slope, wherein the device comprises:

   - means for determining a parameter value $\alpha$ representing the end of said uphill slope,
   - means for determining a parameter value $\beta$ representing the beginning of said subsequent downhill slope,
   - means for, during said section, determining a

parameter value $\gamma$ representing a parameter for a measure taken by the vehicle driver, wherein the said measure constitutes a measure for reducing take off of a positive motor torque, **characterized in that**

said determination of a parameter value $\alpha$ representing the end of said uphill slope comprises a determination of a point $\alpha$ where the inclination of the uphill slope falls below a predetermined angle or where the driving resistance of the vehicle falls below a predetermined value;

said determination of a parameter value $\beta$ representing the beginning of the said downhill slope comprises a determination of a point $\beta$ where the inclination of the downhill slope exceeds a predetermined angle or where the absolute sum of the driving resistance of the vehicle exceeds a predetermined value; said parameter value $\gamma$ representing said measure for reducing a positive motor torque is constituted by a determination of a point $\gamma$ at which said measure for a reduced take off of a positive motor torque is performed; and **in that** it further comprises:

   - means for, based on the quotient $d_1/d$, with $d$ being the distance between the points $\alpha$ and $\beta$ and $d_1$ being the distance between the points $\gamma$ and $\beta$, determining a consumption parameter value representing a fuel consumption behavior of the driver of said vehicle for said section.

2. Device according to claim 1, **characterized in that** said determination of whether the vehicle driver is taking said first measure is arranged to be performed continuously or with certain or predetermined intervals.

3. Device according to any of the claims 1-2, **characterized in that** it further comprises means for storing the said determined parameter values.

4. Device according to any of the claims 1-3, **characterized in that** it comprises means for transmitting the said parameter value representing a fuel consumption behavior to display means and/or sound reproducing means arranged in said vehicle.

5. Device according to any of the claims 1-4, **characterized in that** it comprises means for transmitting the said parameter value representing a fuel consumption behavior to a remotely located monitoring central.

6. Device according to any of the claims 1-5 , **charac-

**terized in that** one or a plurality of the said means at least partially is constituted by a computer program, wherein the device at least partially is constituted by a computer program product comprising a computer-readable medium and a computer program, wherein the computer program is comprised in the computer-readable medium.

7. Vehicle comprising a device according to any of claims 1-6.

8. Method for determining a fuel consumption behavior of a driver of a vehicle for at least a section of a distance a vehicle is traveling, wherein said section is constituted by at least one uphill slope followed by a downhill slope, wherein the method comprises:

> - determining a parameter value $\alpha$ representing the end of said uphill slope;
> - determining a parameter value $\beta$ representing the beginning of said subsequent downhill slope,
> - means for, during said section, determining a parameter value $\gamma$ representing a parameter for a measure taken by the vehicle driver, wherein the said measure constitutes a measure for reducing take off of a positive motor torque,

**characterized in that**

> said determining of a parameter value $\alpha$ representing the end of said uphill slope comprises determining of a point $\alpha$ where the inclination of the uphill slope falls below a predetermined angle or where the driving resistance of the vehicle falls below a predetermined value;
> said determining of a parameter value $\beta$ representing the beginning of the said downhill slope comprises determining of a point $\beta$ where the inclination of the downhill slope exceeds a predetermined angle or where the absolute sum of the driving resistance of the vehicle exceeds a predetermined value;
> said parameter value $\gamma$ representing said measure for reducing a positive motor torque is constituted by a determination of a point $\gamma$ at which said measure for a reduced take off of a positive motor torque is performed; and **in that** it further comprises:

> > - means for, based on the quotient $d_1/d$, with $d$ being the distance between the points $\alpha$ and $\beta$ and $d_1$ being the distance between the points $\gamma$ and $\beta$, determining a consumption parameter value representing a fuel consumption behavior of the driver of said vehicle for said section.

**Patentansprüche**

1. Vorrichtung zum Bestimmen eines Kraftstoffverbrauchsverhaltens eines Fahrers eines Fahrzeugs für mindestens einen Abschnitt einer Strecke, die ein Fahrzeug zurücklegt, wobei der Abschnitt durch mindestens eine Steigung, gefolgt von einem Gefälle, gebildet wird, wobei die Vorrichtung umfasst:

> - Mittel zum Bestimmen eines Parameterwertes $\alpha$, der das Ende der Steigung darstellt,
> - Mittel zum Bestimmen eines Parameterwerts $\beta$, der den Beginn des anschließenden Gefälles darstellt,
> - Mittel, um während dieses Abschnitts einen Parameterwert $\gamma$ zu bestimmen, der einen Parameter für eine vom Fahrzeugfahrer ergriffene Maßnahme darstellt, wobei die Maßnahme durch eine Maßnahme zur Verringerung der Abnahme eines positiven Motordrehmoments gebildet wird, **dadurch gekennzeichnet, dass**

die Bestimmung eines Parameterwertes $\alpha$, der das Ende der Steigung darstellt, eine Bestimmung eines Punktes $\alpha$ umfasst, an dem die Neigung der Steigung unter einen vorgegebenen Winkel fällt oder an dem der Fahrwiderstand des Fahrzeugs unter einen vorgegebenen Wert fällt;

> die Bestimmung eines Parameterwerts $\beta$, der den Beginn des Gefälles darstellt, eine Bestimmung eines Punktes $\beta$ umfasst, an dem die Neigung des Gefälles einen vorbestimmten Winkel überschreitet oder an dem die absolute Summe des Fahrwiderstands des Fahrzeugs einen vorbestimmten Wert überschreitet;
> der Parameterwert $\gamma$, der die Maßnahme zur Verringerung eines positiven Motordrehmoments darstellt, durch eine Bestimmung eines Punktes $\gamma$ gebildet wird, an dem die Maßnahme zur verringerten Abnahme eines positiven Motordrehmoments durchgeführt wird;
> und dadurch, dass es ferner umfasst:

> > - Mittel, um basierend auf dem Quotienten $d_1/d$, wobei $d$ der Abstand zwischen den Punkten $\alpha$ und $\beta$ und $d_1$ der Abstand zwischen den Punkten $\gamma$ und $\beta$ ist, einen Verbrauchsparameterwert zu bestimmen, der ein Kraftstoffverbrauchsverhalten des Fahrers des Fahrzeugs für den Abschnitt darstellt.

2. Vorrichtung nach Anspruch 1, **dadurch gekennzeichnet, dass** die Bestimmung, ob der Fahrzeugfahrer die erste Maßnahme ergreift, so eingerichtet ist, dass sie kontinuierlich oder in bestimmten oder vorgegebenen Intervallen durchgeführt wird.

**3.** Vorrichtung nach einem der Ansprüche 1-2, **dadurch gekennzeichnet, dass** sie ferner Mittel zum Speichern der bestimmten Parameterwerte umfasst.

**4.** Vorrichtung nach einem der Ansprüche 1-3, **dadurch gekennzeichnet, dass** sie Mittel zum Senden des Parameterwerts, der ein Kraftstoffverbrauchsverhalten darstellt, an Anzeigemittel und/oder Tonwiedergabemittel, die in dem Fahrzeug angeordnet sind, umfasst.

**5.** Vorrichtung nach einem der Ansprüche 1-4, **dadurch gekennzeichnet, dass** sie Mittel zum Senden des Parameterwerts, der ein Kraftstoffverbrauchsverhalten darstellt, an eine entfernte Überwachungszentrale umfasst.

**6.** Vorrichtung nach einem der Ansprüche 1-5, **dadurch gekennzeichnet, dass** eines oder mehrere der Mittel zumindest teilweise durch ein Computerprogramm gebildet werden, wobei die Vorrichtung zumindest teilweise durch ein Computerprogrammprodukt gebildet wird, das ein computerlesbares Medium und ein Computerprogramm umfasst, wobei das Computerprogramm in dem computerlesbaren Medium enthalten ist.

**7.** Fahrzeug mit einer Vorrichtung nach einem der Ansprüche 1-6.

**8.** Verfahren zum Bestimmen eines Kraftstoffverbrauchsverhaltens eines Fahrers eines Fahrzeugs für mindestens einen Abschnitt einer Strecke, die ein Fahrzeug zurücklegt, wobei der Abschnitt durch mindestens eine Steigung, gefolgt von einem Gefälle, gebildet wird, wobei das Verfahren umfasst:

- Bestimmen eines Parameterwertes $\alpha$, der das Ende der Steigung darstellt;
- Bestimmen eines Parameterwerts $\beta$, der den Beginn des anschließenden Gefälles darstellt,
- Mittel, um während dieses Abschnitts einen Parameterwert $\gamma$ zu bestimmen, der einen Parameter für eine vom Fahrzeugfahrer ergriffene Maßnahme darstellt, wobei die Maßnahme durch eine Maßnahme zur Verringerung der Abnahme eines positiven Motordrehmoments gebildet wird,

**dadurch gekennzeichnet, dass**

das Bestimmen eines Parameterwertes $\alpha$, der das Ende der Steigung darstellt, ein Bestimmen eines Punktes $\alpha$ umfasst, an dem die Neigung der Steigung unter einen vorgegebenen Winkel fällt oder an dem der Fahrwiderstand des Fahrzeugs unter einen vorgegebenen Wert fällt;

das Bestimmen eines Parameterwerts $\beta$, der den Beginn des Gefälles darstellt, ein Bestimmen eines Punktes $\beta$ umfasst, an dem die Neigung des Gefälles einen vorbestimmten Winkel überschreitet oder an dem die absolute Summe des Fahrwiderstands des Fahrzeugs einen vorbestimmten Wert überschreitet;

der Parameterwert $\gamma$, der die Maßnahme zur Verringerung eines positiven Motordrehmoments darstellt, durch eine Bestimmung eines Punktes $\gamma$ gebildet wird, an dem die Maßnahme zur verringerten Abnahme eines positiven Motordrehmoments durchgeführt wird;

und dadurch, dass es ferner umfasst:

- Mittel, um basierend auf dem Quotienten $d_1/d$, wobei $d$ der Abstand zwischen den Punkten $\alpha$ und $\beta$ und $d_1$ der Abstand zwischen den Punkten $\gamma$ und $\beta$ ist, einen Verbrauchsparameterwert zu bestimmen, der ein Kraftstoffverbrauchsverhalten des Fahrers des Fahrzeugs für den Abschnitt darstellt.

**Revendications**

**1.** Dispositif de détermination d'un comportement de consommation de carburant d'un conducteur d'un véhicule pour au moins une section d'une distance qu'un véhicule parcourt, dans lequel ladite section est constituée d'au moins une pente ascendante suivie d'une pente descendante, dans lequel le dispositif comprend :

- des moyens pour déterminer une valeur de paramètre $\alpha$ représentant la fin de ladite pente ascendante,
- des moyens pour déterminer une valeur de paramètre $\beta$ représentant le début de ladite pente descendante ultérieure,
- des moyens pour, pendant ladite section, déterminer une valeur de paramètre $\gamma$ représentant un paramètre pour une mesure prise par le conducteur du véhicule, dans lequel ladite mesure constitue une mesure pour réduire le décollage d'un couple moteur positif, **caractérisé en ce que**

ladite détermination d'une valeur de paramètre $\alpha$ représentant la fin de ladite pente ascendante comprend une détermination d'un point a où l'inclinaison de la pente ascendante tombe en dessous d'un angle prédéterminé ou où la résistance à l'avancement du véhicule tombe en dessous d'une valeur prédéterminée ;

ladite détermination d'une valeur de paramètre β représentant le début de ladite pente descendante comprend une détermination d'un point a où l'inclinaison de la pente descendante dépasse un angle prédéterminé ou où la somme absolue de la résistance à l'avancement du véhicule dépasse une valeur prédéterminée ; ladite valeur de paramètre γ représentant ladite mesure de réduction d'un couple moteur positif est constituée par une détermination d'un point γ auquel ladite mesure de prise réduite d'un couple moteur positif est effectuée ; et **en ce qu'** il comprend en outre :

    - des moyens pour, à partir du quotient $d_1/d$, avec d étant la distance entre les points $\alpha$ et $\beta$ et $d_1$ étant la distance entre les points γ et β, déterminer une valeur de paramètre de consommation représentant un comportement de consommation de carburant du conducteur dudit véhicule pour ladite section.

2. Dispositif selon la revendication 1, **caractérisé en ce que** ladite détermination du fait que le conducteur du véhicule prend ladite première mesure est agencée pour être exécutée en continu ou avec certains intervalles ou avec des intervalles prédéterminés.

3. Dispositif selon l'une quelconque des revendications 1 et 2, **caractérisé en ce qu'**il comprend en outre des moyens pour stocker lesdites valeurs de paramètres déterminées.

4. Dispositif selon l'une quelconque des revendications 1 à 3, **caractérisé en ce qu'**il comprend un moyen pour transmettre ladite valeur de paramètre représentant le comportement de consommation de carburant à un moyen d'affichage et/ou un moyen de reproduction de son agencé dans ledit véhicule.

5. Dispositif selon l'une quelconque des revendications 1 à 4, **caractérisé en ce qu'**il comprend un moyen pour transmettre ladite valeur de paramètre représentant le comportement de consommation de carburant à une centrale de surveillance située à distance.

6. Dispositif selon l'une quelconque des revendications 1 à 5, **caractérisé en ce que** l'un ou une pluralité desdits moyens, au moins partiellement sont constitués par un programme informatique, dans lequel le dispositif au moins partiellement est constitué par un produit de programme informatique comprenant un support lisible par ordinateur et un programme informatique, dans lequel le programme informatique est compris dans le support lisible par ordinateur.

7. Véhicule comprenant un dispositif selon l'une quelconque des revendications 1 à 6.

8. Procédé de détermination d'un comportement de consommation de carburant d'un conducteur d'un véhicule pour au moins une section d'une distance qu'un véhicule parcourt, dans lequel ladite section est constituée d'au moins une pente ascendante suivie d'une pente descendante, dans lequel le procédé comprend :

    - la détermination d'une valeur de paramètre a représentant la fin de ladite pente ascendante ;
    - la détermination d'une valeur de paramètre p représentant le début de ladite pente descendante ultérieure,
    - des moyens pour, pendant ladite section, déterminer une valeur de paramètre γ représentant un paramètre pour une mesure prise par le conducteur du véhicule, dans lequel ladite mesure constitue une mesure pour réduire le décollage d'un couple moteur positif,

**caractérisé en ce que**

    ladite détermination d'une valeur de paramètre a représentant la fin de ladite pente ascendante comprend une détermination d'un point a où l'inclinaison de la pente ascendante tombe en dessous d'un angle prédéterminé ou où la résistance à l'avancement du véhicule tombe en dessous d'une valeur prédéterminée ; ladite détermination d'une valeur de paramètre β représentant le début de ladite pente descendante comprend une détermination d'un point β où l'inclinaison de la pente descendante dépasse un angle prédéterminé ou où la somme absolue de la résistance à l'avancement du véhicule dépasse une valeur prédéterminée ; ladite valeur de paramètre γ représentant ladite mesure de réduction d'un couple moteur positif est constituée par une détermination d'un point γ auquel ladite mesure de prise réduite d'un couple moteur positif est effectuée ; et **en ce qu'**il comprend en outre :

    - des moyens pour, à partir du quotient $d_1/d$, avec d étant la distance entre les points $\alpha$ et $\beta$ et $d_1$ étant la distance entre les points γ et β, déterminer une valeur de paramètre de consommation représentant un comportement de consommation de carburant du conducteur dudit véhicule pour ladite section.

# Fig. 1

# Fig. 2a

# Fig. 2b

**301** Driving resistance < 0 (downhill) — No / No

**302** Engine torque% > k

Yes

Yes

**303** Positive torque take off in downhill slope

$$U_1 = c \cdot M_{motor} \cdot F_{driving\ resistance}$$

*Fig. 3*

**401** Have we had a positive torque take off in a downhill slope (i.e. value of $U_1$) any time the last h seconds? — No / No

Yes

**402** Are we in an uphill slope? (Driving resistance > $k_2$)

Yes

**403** Remove values of U resulting from the last k seconds from history of the behaviour of the driver.

*Fig. 4*

EP 3 098 574 B1

501

Is the vehicle in a
downhill slope
(driving resistance
< 0)

506

If $T_b > 0$
{
$U_2 = abs(log(T_m/T_b))$
$T_b = T_m = 0;$
}

503

$T_m = T_m + 1$

No

Yes

502

Is the driver
accelerating
(Engine torque > k)
or is the driver
braking or is the
vehicle rolling
freely?

Accelerates

Rolling freely

Braking

504

Is $T_m > 0$
(i.e. Have we been accelerating
previously in the same slope)

605

$T_b = T_b + 1$

Yes

*Fig. 5*

701

Is the vehicle at the top of a
hill?
(Sign change of driving
resistance has occured)

No

Yes

702

Wait 5 seconds

703

Get engine torque before and
after the top of the hill,
$M_{before}$ och $M_{after}$

Get driving resistance before
and after the top of the hill
$F_{before}$ och $F_{after}$

704

$U_3 = -(M_{after}/M_{before}) / (F_{after}/F_{befpre})$

*Fig. 7a*

# Fig. 6

# Fig. 8

# Fig. 7b

**REFERENCES CITED IN THE DESCRIPTION**

**Patent documents cited in the description**

- WO 0007150 A
- WO 0186459 A1
- SE 06003701
- SE 06011761
- SE 06011738
- SE 06011753